# EUROPÄISCHE PATENTSCHRIFT

(11) **EP 2 061 684 B1**
(45) Veröffentlichungstag und Bekanntmachung des Hinweises auf die Patenterteilung: **31.01.2018**
(21) Anmeldenummer: 07802830.5
(22) Anmeldetag: 23.08.2007
(51) Int. Cl.: B60T 8/52

(54) **HYDRAULISCHE BREMSE MIT SICHERHEITSFUNKTION**
HYDRAULIC BRAKE
FREIN HYDRAULIQUE À FONCTION DE SÉCURITÉ

(30) Priorität: 15.09.2006 DE 102006044021
(43) Veröffentlichungstag der Anmeldung: 27.05.2009
(73) Patentinhaber: Siemens Aktiengesellschaft, 80333 München (DE)
(72) Erfinder: STAMMEN, Christian, 59439 Holzwickede (DE); LIERMANN, Matthias, 52066 Aachen (DE); SCHIFFERS, Toni, 41812 Erkelenz (DE)
(86) Internationale Anmeldenummer: PCT/EP2007/058773
(87) Internationale Veröffentlichungsnummer: WO 2008/031702

(56) Entgegenhaltungen:
- CH-A5- 613 167
- DE-A1- 19 949 817
- US-A- 3 700 075
- US-A- 3 727 986
- US-A- 5 036 960

## Beschreibung

Die Erfindung betrifft eine Vorrichtung zum Bremsen einer bewegten Masse mit einem beweglich geführten Kopplungselement zum Andrücken eines Bremsbelages an eine Bremsfläche, einem mit Hydraulikflüssigkeit befüllten Bremszylinder, einem in dem Bremszylinder beweglichen und mit dem Kopplungselement verbundenen Bremskolben, wenigstens einer Hydraulikleitung, die mit dem Bremszylinder verbindbar ist, und einer elektrischen Regeleinrichtung zur Regelung einer Bremsung der Masse in einem Normalbetrieb.

Eine gattungsgemäße Vorrichtung ist beispielsweise aus der Offenlegungsschrift DE 199 49 817 A1 bekannt. Dabei kommt ein elektromagnetisch betätigbares Wegeventil für die Regelung der Bremsung zum Einsatz. Das Wegeventil weist drei Stellungen auf, die durch entsprechende Ansteuerung von einem elektronischen Steuergerät einstellbar sind.

Weiterhin ist aus der Offenlegungsschrift DE 34 41 128 A1 eine hydraulische Bremsanlage mit Hilfskraftunterstützung bekannt. Die dort offenbarte Bremsanlage weist einen Bremsaktor auf, der einen mit Hydraulikflüssigkeit befüllten Bremszylinder umfasst, wobei ein in den Zylinder hineinragendes Bewegteil mit einem Bremsauslöser zum Andrücken eines Bremsbelages an eine Bremsscheibe vorgesehen ist. Der Bremsaktor ist Teil eines Bremssattels, der auf einem Teilkreis beweglich geführt ist. Tangential zum Teilkreis ist eine Zylinderbohrung als Abstützzylinder vorgesehen, wobei in dem Abstützzylinder ein Abstützkolben hineinragt, der an einem Fahrgestell einer zu bremsenden Masse abgestützt ist. Wird der Hydraulikdruck in dem Bremszylinder erhöht, werden die Bremsbeläge an eine sich in Fahrtrichtung drehende Bremsscheibe gedrückt. Es kommt zum Reibschluss und somit zu einer Bewegung des Bremssattels tangential zur Drehrichtung der Bremsscheibe, wobei der an dem Fahrgestell abgestützte und in den Abstützzylinder hineinragende Abstützkolben tiefer in Abstützzylinder hinein bewegt wird. Der Abstützzylinder ist mit einer Hydraulikflüssigkeit befüllt, deren Druck erhöht wird. Der Abstützzylinder ist über eine Hydraulikleitung mit dem Bremszylinder verbunden, so dass es zu einer Kraftverstärkung kommt.

Die Druckschrift GB 1,019,982 beschreibt eine Vorrichtung mit einem innerhalb einer Bremsscheibe angeordneten Spreizglied als Bremsauslöser, der zum Andrücken eines Bremsbelages an eine Bremsscheibe vorgesehen ist. Dabei ist das Spreizglied schwenkbar gelagert. Es wird aufgrund der im Bremsfall auftretenden Verzögerungskraft in Abhängigkeit der Drehrichtung der Bremsscheibe verschwenkt. Dabei ist das Spreizglied und somit der Bremsbelag über Hydraulikleitungen mit einem an dem Gestell einer zu bremsenden Masse befestigten Druckgeber verbunden, der einen Abstützzylinder und einen in den Abstützzylinder hineinragenden Abstützkolben aufweist. Durch das Verschwenken des Spreizgliedes wird der Abstützkolben in den Abstützzylinder hinein verschoben, wodurch die Hydraulikflüssigkeit des Abstützzylinders mit Druck beaufschlagt wird. Der Abstützzylinder ist über Hydraulikleitungen mit einem weiteren Spreizglied verbunden.

Die Offenlegungsschrift DE 43 04 905 A1 beschreibt eine auf rein hydraulisch-mechanischen Prinzipien basierende selbstverstärkende Bremse.

Die Offenlegungsschrift DE 15 30 869 beschreibt ein hydraulisches Bremssystem mit einem Bremsaktor, der über einen Bremsauslöser mit einem Bremsbelag verbunden ist. Ferner ist ein zusätzlicher Druckgeber in Form einer Zylinderbohrung vorgesehen, wobei die Zylinderbohrung mit einer Hydraulikflüssigkeit befüllt ist, und die Hydraulikflüssigkeit nach dem Reibschluss zwischen Bremsscheibe und Bremsbelag von einem Stößel komprimiert wird. Durch diese Kompression verstärkt sich die Bremskraft in dem Bremsaktor, so dass es zu einer Bremsverstärkung kommt.

Die Patentschrift US 3,727,986 betrifft ein Bremssystem mit einem Bremsventil, mittels dessen eine an ein hydraulisches Versorgungssystem angeschlossene Hydraulikleitung mit ersten Eingängen von Wechselventilen, welche Bremszylindern vorgelagerten sind, verbindbar ist. Dabei ist ein Ventilschieber des Bremsventils mittelbar über eine Schubstange durch ein Bremspedal mechanisch betätigbar. Bei normalem Bremsbetrieb befinden sich die Wechselventile in einer ersten Stellung, bei der die Bremszylinder mit dem vom Bremsventil ausgesteuerten Druck beaufschlagt werden. Das Bremssystem weist zusätzlich einen von einem Reservoir gespeisten Backup-Hauptzylinder mit Hauptzylinderkolben und variabler Volumenkammer auf, wobei die variable Volumenkammer mit zweiten Eingängen der Wechselventile verbunden ist. Bei einem Druckverlust des hydraulischen Versorgungssystems führt eine Betätigung des Bremspedals dazu, dass der Ventilschieber des Bremsventils mechanisch auf den Hauptzylinderkolben des Backup-Hauptzylinders wirkt, in Folge dessen die Wechselventile eine zweite Stellung einnehmen, bei der die Bremszylinder mit dem vom Backup-Hauptzylinder ausgesteuerten Druck beaufschlagt werden.Die Patentschrift CH 613 167 beschreibt ein Bremssystem mit zwei Steuerventilen, mittels derer jeweils eine Zuführleitung für ein hydraulisches Druckmittel mit einem Bremszylinder verbindbar ist. Dabei wird vorgeschlagen, aus Sicherheitsgründen die beiden Steuerventile je zweifach vorzusehen, indem sie zu dem betreffenden Steuerventil parallelgeschaltet werden und beispielsweise von einem Magnetventil betätigt werden.

Der gattungsgemäßen Vorrichtung (DE 199 49 817 A1) haftet der Nachteil an, dass im Fehlerfall keine Sicherheitsbremsung durchgeführt werden kann.

Aufgabe der Erfindung ist es daher, im Fehlerfall für eine sichere und kontrollierte schnelle Bremsung der bewegten Masse zu sorgen.

Die Erfindung löst diese Aufgabe mittels einer Vorrichtung gemäß Anspruch 1 durch fluidisch-mechanische Sicherheitsbremsmittel, welche beim Ausfall von Elektronikkomponenten der elektrischen Regeleinrichtung zum Einleiten einer geregelten Bremsung der Masse eingerichtet sind, wobei die Sicherheitsbremsmittel zum Verbinden des Bremszylinders mit der oder den Hydraulikleitungen dienen und ein mechanisch ansprechendes Bremsventil in den Hydraulikleitungen zum Einstellen des Hydraulikdruckes in dem Bremszylinder, einen mechanischen Sollwertgeber und einen hydraulischen Ist-Wertgeber umfassen, wobei der mechanische Sollwertgeber zum Einleiten einer von einem Sollwert abhängigen Soll-Kraft in das Bremsventil eingerichtet ist, wobei der hydraulische Ist-Wertgeber über eine Regelhydraulikleitung mit der oder den Hydraulikleitungen oder dem Bremszylinder kommuniziert und zum Einleiten einer Ist-Kraft in das Bremsventil eingerichtet ist, die vom Druck in der Regelhydraulikleitung abhängig ist, und wobei die Soll-Kraft der Ist-Kraft entgegenwirkt.

Erfindungsgemäß wird im Fehlerfall eine Sicherheitsbremsung durchgeführt. Um auch bei Ausfall von Elektronikkomponenten die Masse sicher zum Stillstand zu bringen, sind die Sicherheitsbremsmittel nicht als Elektronikkomponenten realisiert.

Vielmehr ist eine fluidisch-mechanisch geregelte Sicherheitsbremsung mit fluidisch-mechanischen Sicherheitsbremsmitteln vorgesehen. Die Sicherheitsbremsmittel sind mit anderen Worten fluidisch-mechanische regelbare Sicherheitsbremsmittel mit deren Hilfe eine Sicherheitsbremsung auch bei Ausfall der gesamten Elektronik ermöglicht wird. Erfindungsgemäß ist daher eine hydraulisch-mechanische Bremsvorrichtung bereitgestellt, die besonders ausfallsicher ist. Im Rahmen der Erfindung ist beispielsweise eine Hydraulikleitung vorgesehen, die gegenüber dem Atmosphärendruck einen erhöhten Hydraulikdruck aufweist, oder die zum Bremsen mit Druck beaufschlagt ist.

Vorteilhafterweise sind jedoch wenigstens zwei Hydraulikleitungen mit unterschiedlichen Hydraulikdrücken vorgesehen. Das Vorsehen von mindestens zwei oder mehreren Hydraulikleitungen ist beim Einsatz von Regelungsmitteln zum Einstellen der Bremsung in Abhängigkeit von vorgegebenen Sollwerten vorteilhaft.

Das Bremsventil weist vorteilhafter Weise ein Verschiebeelement auf und ist beispielsweise mit zwei Hydraulikleitungen, die unterschiedliche Hydraulikdrücke aufweisen, eingangsseitig verbunden. Ausgangsseitig ist das Bremsventil an den Bremszylinder angeschlossen. In Abhängigkeit der Stellung des Verschiebeelements ist ein Druck- oder Differenzdruck im Bremszylinder erzeugbar, mit dem die Anpresskraft des Bremsbelages an die Bremsfläche wie beispielsweise eine rotierbare Bremsscheibe bestimmt ist. Die Stellung des Verschiebelements entspricht der Differenz aus der Sollkraft und der Istkraft. Beide Kräfte wirken beispielsweise von unterschiedlichen Seiten auf das Verschiebeelement ein. Ist die Sollkraft größer als die Istkraft, die beispielsweise vom Hydraulikdruck im Bremszylinder abgeleitet wird, wird das Verschiebeelement in eine Stellung verschoben, mit der der Hydraulikdruck im Bremszylinder erhöht wird. Die Vergrößerung des Hydraulikdruckes hat eine Vergrößerung der Istkraft zur Folge. Dies bewirkt eine Verschiebung des Verschiebeelementes entgegen der Richtung der Sollkraft, so dass der Hydraulikdruck im Bremszylinder verringert wird. Dieser Vorgang wiederholt sich bis der Unterschied zwischen Soll- und Istkraft minimiert ist. Mit anderen Worten wird eine geregelte Sicherheitsbremsung mittels fluidisch-mechanischer Sicherheitsbremsmittel bereitgestellt. Die erfindungsgemäßen Sicherheitsbremsmittel basieren auf pneumatischen, hydraulischen oder anderen mechanischen Kräften, die ausfallsicher erzeugbar sind.

Zweckmäßigerweise ist der Bremsbelag über Verbindungsmittel mit einem an einem Gestell der zu bremsenden Masse befestigten Druckgeber abgestützt, der einen mit Hydraulikflüssigkeit befüllten Abstützzylinder und einen in den Abstützzylinder hineinragenden Abstützkolben aufweist, wobei der Abstützzylinder über die Hydraulikleitung mit dem Bremszylinder kommuniziert. Gemäß dieser zweckmäßigen Weiterentwicklung ist eine sich selbst verstärkende hydraulische Bremse bereitgestellt, die eine Sicherheitsfunktion aufweist. Die Selbstverstärkung beruht darauf, dass der Bremsbelag an einem hydraulischen oder pneumatischen Druckgeber abgestützt ist. Im Bremsfall gelangt der Bremsbelag mit der Bremsfläche in Eingriff und wird aufgrund des Reibschlusses tangential zur Drehrichtung der Bremsfläche beschleunigt. Die sich daraus ergebende Kraft wird über die Verbindungsmittel in den Druckgeber eingeleitet, dessen Abstützkolben die Hydraulikflüssigkeit mit Druck beaufschlagt, wobei der Druck über die Hydraulikleitungen auch in dem Bremszylinder erhöht wird. Dies bewirkt jedoch ein stärkeres Anpressen des Bremsbelages an die Bremsfläche und somit eine Bremsverstärkung.
Vorteilhafterweise sind die Flächen von Abstützzylinder und Bremsaktor so gewählt, dass der im Abstützzylinder bei einer Bremsung hervorgerufene Druck größer als der zum Bremsen erforderliche Druck ist.

Zweckmäßigerweise kommuniziert die Regelhydraulikleitung mit dem Abstützzylinder. Gemäß dieser vorteilhaften Weiterentwicklung basiert die Istkraft zur Regelung der Sicherheitsbremsung auf dem Hydraulikdruck im Abstützzylinder. Diese entspricht daher genau der Verzögerungskraft im Bremsradius, also der Kraft, mit dem der Bremsbelag am Druckgeber abgestützt ist. Die Verzögerungskraft stellt eine besonders genaue Regelungsgröße bereit, da die Verzögerungskraft ursächlich mit der Verlangsamung der bewegten Masse verknüpft ist.

Gemäß einem bevorzugten Ausführungsbeispiel ist der Abstützzylinder durch den Abstützkolben in einer Abstützkammer und in eine Abstützrückholkammer unterteilt, wobei die Abstützkammer und die Abstützrückholkammer über Rückschlagventile mit einer Hochdruck- oder Niederdruckleitung kommunizieren. Gemäß dieser vorteilhaften Weiterentwicklung ist die Drehrichtung der Bremsfläche für die Selbstverstärkung irrelevant. Sowohl bei Vorwärts- als auch bei Rückwärtsfahrten ist eine Selbstverstärkung der Bremsung möglich.

Gemäß einer diesbezüglich zweckmäßigen Weiterentwicklung sind in der Abstützkammer und in der Abstützrückholkammer Druckfedern vorgesehen, wobei ein Rückgeberrückstellventil zum Druckausgleich zwischen Abstützkammer und der Abstützrückholkammer vorgesehen ist und wobei eine Steuerungseinheit den Druckausgleich durch das Druckgeberrückstellventil und die Druckfedern einleitet. Das Druckgeberrückstellventil kann bei entsprechender Aktivierung durch die Steuerungseinheit die beiden Kammern des Druckgebers miteinander verbinden. Es kommt daher zu einem Druckausgleich zwischen den beiden Kammern. Anschließend bewirken die in den Kammern angeordneten Druckfedern eine Verschiebung des Abstützkolbens beziehungsweise des Abstützzylinders in die Ausgangsstellung. Auf diese Weise wird vermieden, dass eine Bremsung eingeleitet wird, wenn sich der Abstützkolben bereits kurz vor seinem Anschlag an eine Begrenzung des Abstützzylinders befindet.

Zweckmäßigerweise ist die Regelhydraulikleitung mit dem Ausgang eines Ventils verbunden, das eingangsseitig mit der Abstützkammer oder mit der Abstützrückholkammer in Abhängigkeit des höheren Druckes kommuniziert. Gemäß dieser vorteilhaften Weiterentwicklung sind die Sicherheitsbremsmittel an ein zweikammeriges Abstützsystem angepasst. Das zweikammerige Abstützsystem ermöglicht die Selbstverstärkung sowohl bei Vorwärts- als auch bei Rückwärtsfahrten. Dies ist insbesondere bei Fahrzeugen vorteilhaft.

Gemäß einer zweckmäßigen Weiterentwicklung weist der Sollwertgeber eine mit einer Stellfeder zusammenwirkende Stellschraube auf. Bei der Stellfeder handelt es sich beispielsweise um eine Druckfeder. Diese wird durch Verdrehen der Stellschraube zusammengepresst, so dass die Druckkraft der Stellfeder, die auf das Bremsventil einwirkt, erhöht. Ein Verdrehen der Stellschraube in eine andere Richtung verringert die Federkraft und somit die in das Bremsventil eingeleitete Sollkraft.

Vorteilhafterweise weist der Sollwertgeber einen fluidischen oder mechanischen Umsetzer auf, der eine Sollkraft erzeugt, die von der zu bremsenden Masse abhängig ist. Gemäß dieser vorteilhaften Weiterentwicklung wird durch den Umsetzer beispielsweise ständig das Gewicht der zu bremsenden Masse gemessen. In Abhängigkeit des gemessenen Gewichtes wird vom Umsetzer eine entsprechende Sollkraft erzeugt, so dass eine Sicherheitsbremsung durchgeführt wird, die von der zu bremsenden Masse bestimmt wird. Selbstverständlich ist es im Rahmen der Erfindung auch möglich, dass sowohl ein Umsetzer als auch eine Stellschraube vorgesehen ist, wobei der Umsetzer direkt oder über die Stellschraube wirkt.

Vorteilhafterweise verfügt der Istwertgeber über einen Druckzylinder mit einem Verschiebeelement. So wird beispielsweise in dem Istwertgeber ein Hydraulikdruck erzeugt, der eine Verschiebung des Verschiebungselementes herbeiführt, wobei durch die Verschiebung des Verschiebeelementes beispielsweise eine Druckfeder zusammengedrückt wird, so dass aus dem Hydraulikdruck im Istwertgeber eine Federkraft erzeugbar ist, die der eingeleiteten Sollkraft entgegen wirkt. Die Erzeugung des Hydraulikdruckes kann im Rahmen der Erfindung grundsätzlich beliebig erfolgen. So ist bei einer abweichenden Variante der Erfindung das Verschiebeelement über eine geeignete Hebelmechanik mit dem Bremsbelag verbunden. Mit anderen Worten ist der Bremsbelag an dem Druckzylinder über fluidische oder mechanische Mittel abgestützt.

Zweckmäßigerweise trägt die elektrische Regeleinrichtung, welche zur Regelung der Bremsung der Masse im Normalbetrieb ausgelegt ist, den Sicherheitsbremsmitteln Rechnung, und zwar beispielsweise insoweit, dass die elektrische Regeleinrichtung eine vorgegebene Sollkraft unter Berücksichtigung der bereits von den Sicherheitsbremsmitteln vorgegebenen mechanischen Sollkraft berechnet, so dass die über die elektrische Regelungseinrichtung vorgegebene Sollkraft beispielsweise der Differenz aus einer gewünschten Sollkraft und der mechanischen Sollkraft entspricht. Die Sicherheitsbremsmittel greifen jedoch bei Ausfall der elektrischen Regeleinrichtung ein und führen eine Sicherheitsbremsung in Abhängigkeit der mechanischen Sollkraft durch.

Gemäß einer zweckmäßigen Weiterentwicklung wirkt die elektrische Regeleinrichtung mittels eines Verstellers auf das Bremsventil ein. Der Zugriff auf das Bremsventil erfolgt daher mittels eines Verstellers, beispielsweise ein auf ein Verschiebeelement des Bremsventils einwirkendes Bauteil. Der Versteller ist beispielsweise ein elektrodynamisch arbeitendes Bauteil, das eine Kraft in Abhängigkeit eines Stromflusses in das Verschiebeelement des Bremsventils einleitet. Der Versteller ist abweichend hiervon zum Verdrehen einer Stellschraube eingerichtet.

Gemäß einer zweckmäßigen Weiterentwicklung ist das Kopplungselement über eine Hebelmechanik mit dem Bremsbelag verbunden. Das Kopplungselement ist beispielsweise eine Schubstange, die über Hebel und Gestänge auf den Bremsbelag einwirkt, der räumlich entfernt vom Bremszylinder angeordnet ist. Solche Hebelmechaniken sind dem Fachmann jedoch bekannt, so dass an dieser Stelle hierauf nicht weiter eingegangen werden braucht.

Gemäß einer vorteilhaften Weiterentwicklung umfasst der Bremsaktor einen mit Hydraulikflüssigkeit befüllten Bremszylinder und einen Bremskolben, die relativ zueinander beweglich sind. Abweichend von dieser üblichen Ausgestaltung des Bremsaktors sind jedoch im Rahmen der Erfindung auch andere Bremsaktoren, die dem Fachmann als solche bekannt sind, einsetzbar.

Zweckmäßigerweise ist der Bremskolben fest mit dem Kopplungsglied verbunden.

Gemäß einer bevorzugten Ausgestaltung der Erfindung wird der Bremszylinder durch den Bremskolben in eine Bremskammer und in eine Bremsrückholkammer unterteilt. Der Bremszylinder ist mit anderen Worten als doppelt wirkender Zylinder ausgestaltet. Die sich einstellende Bremskraft ist daher im Wesentlichen von dem Druckunterschied zwischen Bremskammer und Bremsrückholkammer abhängig.

Gemäß einer weiteren vorteilhaften Ausgestaltung der Erfindung umfasst das Kopplungsglied eine Bremsstange, die sich durch die Bremsrückholkammer erstreckt. Gemäß dieser vorteilhaften Weiterentwicklung der Erfindung wird bei Druckgleichheit zwischen Bremskammer und Bremsrückholkammer aufgrund der größeren Fläche des Bremskolbens in der Bremskammer eine höhere Kraft in der Bremskammer erzeugt, so dass der Bremskolben bei Druckgleichheit aus seiner Mittenstellung hinaus verschoben wird. Dies ist beispielsweise zum Einleiten einer Sicherheitsbremsung bei Druckausfall vorteilhaft. Hinzu kann die Wirkung einer Vorspannfeder treten.

Vorteilhafterweise umfasst der Bremsaktor einen Bremszylinder und einen Bremskolben, der den Bremszylinder in eine Bremskammer und in eine Bremsrückholkammer unterteilt, wobei die Bremskammer und die Bremsrückholkammer mittels eines Bremsventils sowohl mit einem fluidischen Hochdruckkreis als auch mit einem fluidischen Niederdruckkreis verbindbar ist.

Gemäß einer weiteren vorteilhaften Weiterentwicklung der Erfindung ist eine Vorspannfeder zum Andrücken des Bremsbelags an die Bremsfläche vorgesehen. Die Anordnung der Vorspannfeder ist im Rahmen der Erfindung grundsätzlich beliebig. Liegt kein Druck in den Hydraulikleitungen vor, bleibt der Bremsbelag von der Kraft der Vorspannfeder gegen die Bremsfläche gedrückt.

Vorteilhafterweise sind ein Hochdruckbehälter, der Teil eines Hochdruckkreises ist, und ein Niederdruckbehälter, der Teil eines Niederdruckkreises ist, zum Bereitstellen von Hydraulikflüssigkeit vorgesehen, wobei der Hochdruckkreis und der Niederdruckkreis mit dem Bremsventil verbunden sind. Das Bremsventil ist zweckmäßigerweise zum Erzeugen beliebiger Drücke im Bremsaktor vorgesehen, wobei die erzeugbaren Drücke im Bereich der Druckdifferenz zwischen Hochdruckkreis und Niederdruckkreis liegen.

Gemäß einer diesbezüglich zweckmäßigen Weiterentwicklung ist jeder Hochdruckbehälter und jeder Niederdruckbehälter jeweils mit einem Rückschlagventil und einer Drossel ausgerüstet. Übersteigt der Druck im Hochdruckbehälter beziehungsweise im Niederdruckbehälter den Druck im Hochdruckkreis beziehungsweise im Niederdruckkreis wird über die Drossel Hydraulikflüssigkeit von dem jeweiligen Druckbehälter in den Hydraulikkreis nachgeführt, so dass stets eine ausreichende Menge an Hydraulikflüssigkeit zur Verfügung steht.

Zweckmäßigerweise ist der Bremsbelag über die Verbindungsmittel mit dem Abstützzylinder verbunden, wobei der Abstützkolben am Gestell befestigt ist. Diese Variante der Erfindung ermöglicht eine besonders kompakte Herstellung der erfindungsgemäßen Vorrichtung, da sämtliche mit Hydraulikflüssigkeit befüllten Zylinder und Leitungen beispielsweise zu einem Bauteil zusammengefasst werden können. Insbesondere ist eine gemeinsame Herstellung dieser Bauteile ermöglicht. Lediglich der Abstützkolben beziehungsweise die sich vom Abstützkolben aus dem Abstützzylinder herauserstreckende Abstützstange ist mit ihrem freien vom Abstützkolben abgewandten Ende am Gestell der zu bremsenden Masse zu befestigen.

Gemäß einer hiervon abweichenden Ausgestaltung der Erfindung ist der Bremsbelag über die Verbindungsmittel mit dem Abstützkolben verbunden, wobei der Abstützzylinder am Gestell befestigt ist.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung, deren Sicherheitsbremsmittel figürlich nicht dargestellt sind, und
- Figur 2: die Vorrichtung gemäß Figur 1 bei Ausfall der elektronischen Regeleinheit zeigen.

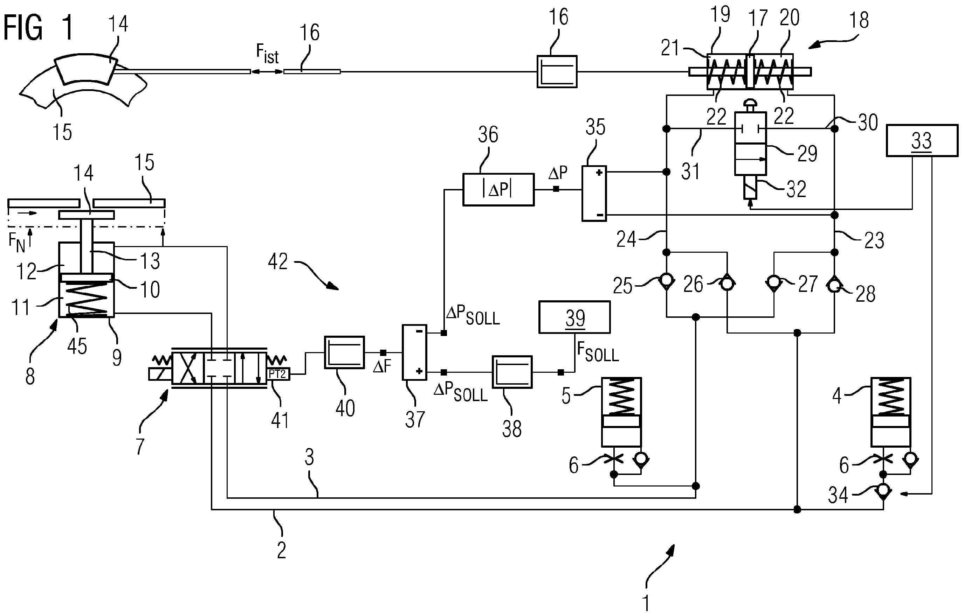

Figur 1 zeigt ein erstes Ausführungsbeispiel der erfindungsgemäßen Vorrichtung 1 in einer schematischen Darstellung, wobei die Sicherheitsbremsmittel figürlich nicht dargestellt sind. Die erfindungsgemäße Vorrichtung 1 umfasst einen Hochdruckkreis 2 sowie einen Niederdruckkreis 3, die jeweils mit einem Hochdruckbehälter 4 beziehungsweise mit einem Niederdruckbehälter 5 kommunizieren. Der Hochdruckbehälter 4 und der Niederdruckbehälter 5 sind jeweils mit einer Kombination aus Drossel und Rückschlagventil 6 ausgerüstet, über das diese mit der jeweiligen Hydraulikleitung 2,3 verbunden ist. Ist der Druck in der jeweils zugeordneten Hydraulikleitung 2,3 geringer als in dem Hochdruckbehälter 4 beziehungsweise dem Niederdruckbehälter 5, tritt Hydraulikflüssigkeit aus dem jeweiligen Druckbehälter 4,5 aus und wird dem System zur Verfügung gestellt. Auf diese Weise wird einem Mangel an Hydraulikflüssigkeit entgegengewirkt. Der Hochdruckkreis 2 und der Niederdruckkreis 3 sind über ein analoges Schieberregelventil 7 als Bremsventil mit einem Bremsaktor 8 verbunden, der einen Bremszylinder 9 aufweist. Der Bremszylinder 9 ist durch einen Bremskolben 10 in eine Bremskammer 11 sowie eine Bremsrückholkammer 12 unterteilt. Vom Druckkolben 10 erstreckt sich eine Kopplungsstange 13 als Kopplungsglied zu einem Bremsbelag 14, der zum Andrücken an eine Bremsscheibe 15 als Bremsfläche vorgesehen ist. In der Figur 1 sind die Bremsscheibe 15 und der Bremsbelag 14 sowohl in einer Draufsicht als auch in einer Seitenansicht gezeigt.

In der in Figur 1 oben gezeigten Darstellung ist erkennbar, dass der Bremsbelag 14 über Abstützmittel 16, wie beispielsweise eine einfache Stange oder eine beliebige andere Hebelmechanik mit dem Abstützkolben 17 eines Druckgebers 18 verbunden ist. Der Druckgeber 18 weist neben dem Abstützkolben 17 einen Abstützzylinder 19 auf. Der Abstützkolben 17 teilt den Abstützzylinder 19 in eine Abstützkammer 20 sowie in eine Abstützrückholkammer 21. In der Abstützkammer 20 und in der Abstützrückholkammer 21 sind jeweils Druckfedern 22 angeordnet.

Der Bremsbelag 14 ist tangential zur Drehrichtung der Drehscheibe 15 beweglich gelagert und daher an dem an einem Fahrgestell eines Schienenfahrzeugs befestigten Druckgeber abgestützt.

Die Abstützkammer 20 und die Abstützrückholkammer 21 sind jeweils über zweckmäßige Hydraulikleitungen 23 beziehungsweise 24 mit dem Hochdruckkreis 2 beziehungsweise dem Niederdruckkreis 3 verbunden. Dabei kommunizieren die Hydraulikleitungen 23, 24 mit Rückschlagventilen 25 bis 28. Die in der Hydraulikleitung 24 der Abstützrückholkammer 21 angeordneten Rückschlagventile 25, 26 sind gegensinnig zueinander ausgerichtet. Herrscht in der Abstützrückholkammer 21 ein höherer Druck als im Niederdruckkreis 3, verschließt das Rückschlagventil 25 die Verbindung zwischen der Hydraulikleitung 24 und dem Niederdruckkreis 3. Ist hingegen der Druck in der Abstützrückholkammer 21 größer als der in dem Hochdruckkreis 2, öffnet das Rückschlagventil 26, so dass Fluid wie beispielsweise eine geeignete Hydraulikflüssigkeit aus der Abstützrückholkammer 21 verdrängt und in den Hochdruckbehälter 4 überführt wird. Ist der Druck in der Abstützrückholkammer 21 hingegen niedriger als im Niederdruckkreis 3, öffnet das Ventil 25, so dass ein Zufluss von Hydraulikflüssigkeit aus dem Niederdruckbehälter 5 in die Abstützrückholkammer 21 ermöglicht ist. Entsprechendes gilt für das Zusammenwirken der Abstützkammer 20 und den Rückschlagventilen 27, 28 über die Hydraulikleitung 23.

In Figur 1 ist ferner ein Druckgeberrückstellventil 29 erkennbar, das über Hydraulikleitungen 30 und 31 mit der Abstützkammer 20 beziehungsweise der Abstützrückholkammer 21 kommuniziert. Das Druckgeberrückstellventil 29 verfügt über ein Schiebeglied 32, das bei Bestätigung den Druckausgleich zwischen der Abstützkammer 20 und der Abstützrückholkammer 21 herbeiführt. Liegt ein Druckausgleich vor, verschieben die Druckfedern 22 den Abstützkolben 17 wieder in die in Figur 1 gezeigte Mittelstellung. Auf diese Weise wird vermieden, dass der Abstützkolben 17 gegen eine Begrenzungswandung des Abstützzylinders 19 verschoben und somit die Bremsverstärkung unterbrochen wird. Zum Bestätigen des Druckgeberrückstellventils 29 dient eine zweckmäßige Druckausgleichsteuereinheit 33. Die Bestätigung erfolgt beispielsweise über elektrodynamische Kräfte.

Die Druckausgleichsteuereinheit 33 wirkt ferner auf ein entsperrbares Regelungsventil 34 ein, das ein Ablassen des Drucks aus dem Hochdruckkreis 2 beispielsweise zu Wartungszwecken ermöglicht.

Die Hydraulikleitungen 23 und 24 sind jeweils mit geeichten figürlich nicht dargestellten Druck-Spannungsumsetzern versehen. Jeder Druck-Spannungsumsetzer stellt eine dem Druck in der Abstützkammer 20 beziehungsweise in der Abstützrückholkammer 21 proportionale Spannung an seinem Ausgang bereit.

Der Ausgang jedes Druck-Spannungsumsetzers liegt an dem Eingang eines Differenzbildners 35 an. Der Differenzbildner 35 ist ausgangsseitig mit einem Betragsbildner 36 verbunden, der aus der vom Differenzbildner 35 bereitgestellten Druckdifferenz Δp den Betrag |Δp| berechnet. Der Betrag der Druckdifferenz |Δp| wird schließlich an den Eingang eines Vergleichers 37 gelegt. Am zweiten Eingang des Vergleichers 37 liegt eine Solldruckdifferenz Δpₛₒₗₗ als Sollwert an, die ausgehend von einer Sollkraft Fₛₒₗₗ und in Abhängigkeit eines vorgegebenen Flächenfaktors 38 berechnet wird. Die Sollkraft Fₛₒₗₗ wird mittels einer zweckmäßigen Steuerungseinheit 39 durch einen Benutzer der Vorrichtung eingegeben. Der Vergleicher 37 erzeugt an seinem Ausgang einen Differenzwert ΔF, der an dem Eingang einer Regeleinheit 40 anliegt, die anschließend ein Verschiebelement 41 des Bremsventils 7 so verschiebt, dass der Differenzwert ΔF minimiert wird. Das Bremsventil 7 ist beispielsweise ein Proportionalventil.

Zum Andrücken des Bremsbelages 14 an die Bremsscheibe 15 dient eine Vorspannfeder 45. Die Vorspannfeder 45 drückt den Bremsbelag gegen die Bremsscheibe, falls sich hydraulisch keine Andruckkraft erzeugen lässt.

Die Wirkungsweise der erfindungsgemäßen Vorrichtung 1 ist wie folgt: Zum Einleiten eines Bremsvorganges wird eine Sollkraft Fₛₒₗₗ über die Regelungsmittel 42 angefordert. Die Regelungsmittel 42 umfassen die Steuerungseinheit 39, die figürlich nicht dargestellten Messsensoren, den Differenzbildner 35, den Betragsbildner 36, den Flächenfaktorbilder 38, den Vergleicher 37, die Regeleinheit 40 und das Bremsventil 7. Die Druckdifferenz Δp zwischen der Abstützkammer 20 und der Abstützrückholkammer 21 ist zu Beginn der Bremsung gleich null, so dass ein großer Differenzwert ΔF durch den Vergleicher 37 erzeugt wird. Die Regeleinheit 40 verschiebt anschließend das Verschiebelement 41 nach links, so dass ein großer Druckunterschied zwischen der Bremskammer 11 und der Bremsrückholkammer 12 erzeugt wird. Dabei ist der Druck in der Bremskammer 11 höher als in der Bremsrückholkammer 12. Es kommt zu einem Verschieben des Bremskolbens 10 und somit zum Einleiten einer Andruckkraft F_{N} in der mit den Pfeilen angedeuteten Richtung auf die Bremsscheibe 5. Durch den Reibschluss zwischen Bremsbelag und Bremsscheibe 5 wird eine tangential zur Drehrichtung der Bremsscheibe 5 gerichtete Reibkraft oder mit anderen Worten eine Verzögerungskraft Fᵢₛₜ erzeugt. Die Verzögerungskraft Fᵢₛₜ wird aufgrund der beweglichen Lagerung des Bremsbelages 14 über die Verbindungsmittel 16, also die Hebelmechanik, in den Abstützkolben 17 eingeleitet. Der Abstützkolben 17 wird bei einer Drehung der Bremsscheibe 15 im Uhrzeigersinn aus der in Figur 1 gezeigten Stellung nach rechts verschoben. In der Abstützkammer 20 erhöht sich daher der Druck der Hydraulikflüssigkeit gegenüber dem Druck der Hydraulikflüssigkeit in der Abstützrückholkammer 21. Die Drücke werden jeweils durch die Druck-Spannungsumsetzer erfasst und an den Eingang des Differenzbildners 35 gelegt. Dies führt am Ausgang des Differenzbildners 35 zu einer Druckdifferenz Δp und somit zu einem entsprechenden Betrag |Δp| oder Absolutwert am Ausgang des Betragsbildners 36. Der Differenzwert ΔF verkleinert sich, wobei die Regelungseinheit 40 im weiteren Verlauf der Regelung dafür sorgt, dass der Differenzwert ΔF schließlich minimiert wird. Mit anderen Worten ist erfindungsgemäß eine Selbstverstärkung und eine gleichzeitige Regelung der Bremskraft bereitgestellt.

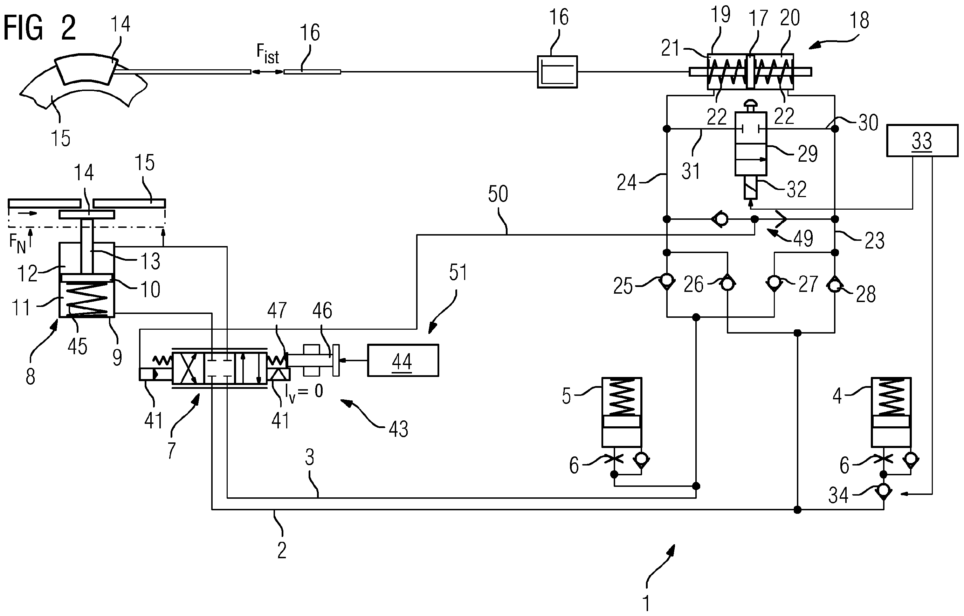

Figur 2 zeigt das Ausführungsbeispiel gemäß Figur 1, wobei jedoch die elektronischen Komponenten der elektrischen Regeleinrichtung 42 aus Gründen der Übersicht weggelassen wurden. Es ist erkennbar, dass die Regelung des Bremsventils 7 nunmehr von fluidisch-mechanischen Sicherheitsmitteln 43 durchgeführt wird. Diese umfassen eine Lastkorrektur 44, die schematisch angedeutet ist. Die Lastkorrektur 44 umfasst einen Lastgeber, der in Abhängigkeit des Gewichts der zu bremsenden Masse eine Stellschraube 46 derartig verstellt, dass die Federkraft einer Druckfeder 47 die notwendige Sollkraft auf das Verschiebelement 41 des Bremsventils 7 einleitet. Abweichend davon kann die Lastkorrektur auch direkt auf das Verschiebeelement wirken. Der Sollkraft wirkt eine Istkraft entgegen, wobei die Istkraft von einem figürlich nicht dargestellten Istkraftgeber erzeugt wird. Der Istkraftgeber umfasst einen nicht sichtbaren Druckzylinder mit einem Verschiebelement 41, das eine Istkraft in das Verschiebeelement 41 eingeleitet. Die Istkraft ist der Sollkraft entgegengesetzt. Der pneumatische Druck im Druckzylinder des Istwertgebers entspricht entweder dem Druck der Abstützkammer 20 oder Abstützrückholkammer 21 je nach dem, in welcher der besagten Kammern der größere Hydraulikdruck anliegt. Hierzu dient ein Doppel-Rückschlagventil 49, dessen zwei Eingänge mit der Abstützkammer 20 beziehungsweise mit der Abstützrückholkammer 21 verbunden sind. Den Ausgang des Doppel-Rückschlagventils 49 verbindet eine Regelhydraulikleitung 50 mit dem Druckzylinder des Istwertgebers.

Die Sicherheitsbremsmittel 43 umfassen die Lastkorrektur 44, die Stellschraube 46, die Druckfeder 47, das Bremsventil 7 mit Verschiebelement 41 und den figürlich nicht dargestellten Istwertgeber.

Bei Ausfall der elektronischen Bauteile der elektrischen Regelungseinheit 42 leiten die Sicherheitsbremsmittel 43 daher eine geregelte Sicherheitsbremsung ein. Die Bremskraft wird dabei durch die Sollkraft vorgegeben. Zu Beginn der Bremsung ist der Druck in der Abstützkammer 20 beziehungsweise in der Abstützrückholkammer 21 ausgeglichen und so gering, dass die über den Istwertgeber erzeugte Istkraft geringer ist als die vom Sollwertgeber, also von Stellschraube 46 mit Druckfeder 47, eingestellte Sollkraft. Demnach wird das Verschiebelement 41 in der Darstellung gemäß Figur 2 nach links bewegt. Dies bedeutet, dass ein großer Druckunterschied im Bremszylinder 9 erzeugt und der Bremsbelag 14 mit einer hohen Normalkraft F_{N} gegen die Bremsscheibe 15 gepresst wird. Die Bremsscheibe 15 bewegt sich im Uhrzeigersinn, so dass es zu einem Druckaufbau in der Abstützrückholkammer 21 kommt. Durch den erhöhten Druck in der Abstützrückholkammer 21 erhöht sich auch der Druck in dem figürlich nicht dargestellten Druckzylinder des Istwertgebers. Dies bewirkt eine Erhöhung der Istkraft, die eine Verschiebung des Verschiebelementes 41 in Figur 2 nach rechts verursacht, so dass der Druckunterschied in den Kammern des Bremszylinders 9 verringert wird. Die Normalkraft F_{N} wird abgeschwächt. Dies wird solange fortgesetzt, bis die Abstützkraft des Bremsbelags 14 am Druckgeber 18 der eingestellten Sollkraft entspricht.

## Patentansprüche

1. Vorrichtung (1) zum Bremsen einer bewegten Masse mit
- einem beweglich geführten Kopplungselement (13) zum Andrücken eines Bremsbelages (14) an eine Bremsfläche (15),
- einem mit Hydraulikflüssigkeit befüllten Bremszylinder (9),
- einem in dem Bremszylinder (9) beweglichen und mit dem Kopplungselement (13) verbundenen Bremskolben (10),
- wenigstens einer Hydraulikleitung (2,3), die mit dem Bremszylinder (9) verbindbar ist, und
- einer elektrischen Regeleinrichtung (42) zur Regelung einer Bremsung der Masse in einem Normalbetrieb, **gekennzeichnet durch**
- fluidisch-mechanische Sicherheitsbremsmittel (43), welche beim Ausfall von Elektronikkomponenten der elektrischen Regeleinrichtung (42) zum Einleiten einer geregelten Bremsung der Masse eingerichtet sind,
- wobei die Sicherheitsbremsmittel (43) zum Verbinden des Bremszylinders (9) mit der oder den Hydraulikleitungen (2,3) dienen und ein mechanisch ansprechendes Bremsventil (7) in den Hydraulikleitungen (2,3) zum Einstellen des Hydraulikdruckes in dem Bremszylinder (9), einen mechanischen Sollwertgeber (46,47) und einen hydraulischen Ist-Wertgeber umfassen,
- wobei der mechanische Sollwertgeber (46,47) zum Einleiten einer von einem Sollwert abhängigen Soll-Kraft in das Bremsventil (7) eingerichtet ist,
- wobei der hydraulische Ist-Wertgeber über eine Regelhydraulikleitung (50) mit der oder den Hydraulikleitungen (2,3) oder dem Bremszylinder (9) kommuniziert und zum Einleiten einer Ist-Kraft in das Bremsventil (7) eingerichtet ist, die vom Druck in der Regelhydraulikleitung (50) abhängig ist, und
- wobei die Soll-Kraft der Ist-Kraft entgegenwirkt.

2. Vorrichtung (1) nach Anspruch 1,
**gekennzeichnet durch**
zwei Hydraulikleitungen (2,3) mit unterschiedlichen Hydraulikdrücken.

3. Vorrichtung (1) nach Anspruch 1 oder 2,
**dadurch gekennzeichnet, dass**
der Bremsbelag (14) über Verbindungsmittel mit einem an einem Gestell der zu bremsenden Masse befestigten Druckgeber (18) abgestützt ist, der einen mit Hydraulikflüssigkeit befüllten Abstützzylinder (19) und einen in den Abstützzylinder (19) hineinragenden Abstützkolben (17) aufweist, wobei der Abstützzylinder (19) über die Hydraulikleitungen (2,3,23,24) mit dem Bremszylinder (9) kommuniziert.

4. Vorrichtung (1) nach Anspruch 3,
**dadurch gekennzeichnet, dass**
die Regelhydraulikleitung (50) mit dem Abstützzylinder (19) kommuniziert.

5. Vorrichtung (1) nach Anspruch 3 oder 4,
**dadurch gekennzeichnet, dass** der Abstützzylinder (19) durch den Abstützkolben (17) in eine Abstützkammer (20) und eine Abstützrückholkammer (21) unterteilt ist, wobei die Abstützkammer und die Abstützrückholkammer über Rückschlagventile mit einer Hochdruck- oder Niederdruckleitung kommunizieren.

6. Vorrichtung (1) nach Anspruch 5,
**dadurch gekennzeichnet, dass**
in der Abstützkammer (20) und in der Abstützrückholkammer (21) Druckfedern (22) vorgesehen sind, wobei ein Druckgeberrückstellventil (29) zum Druckausgleich zwischen der Abstützkammer (20) und der Abstützrückholkammer (21) vorgesehen ist und wobei eine Steuerungseinheit (33) den Druckausgleich durch das Druckgeberrückstellventil (29) und die Druckfedern (22) einleitet.

7. Vorrichtung (1) nach Anspruch 5 oder 6,
**dadurch gekennzeichnet, dass**
die Regelhydraulikleitung (50) mit dem Ausgang eines Ventils (49) verbunden ist, das eingangsseitig mit der Abstützkammer (20) oder mit der Abstützrückholkammer (21) in Abhängigkeit des höheren Druckes kommuniziert.

8. Vorrichtung (1) nach einem der Ansprüche 1 bis 7,
**dadurch gekennzeichnet, dass**
der Sollwertgeber eine mit einer Stellfeder (47) zusammenwirkende Stellschraube (46) aufweist.

9. Vorrichtung (1) nach einem der Ansprüche 1 bis 8,
**dadurch gekennzeichnet, dass** der Sollwertgeber (46,47) einen fluidischen oder mechanischen Umsetzer aufweist, der eine Sollkraft erzeugt, die von der zu bremsenden Masse abhängig ist.

10. Vorrichtung (1) nach einem der Ansprüche 1 bis 9,
**dadurch gekennzeichnet, dass**
der Istwertgeber über einen Druckzylinder mit einem Verschiebeelement verfügt.

11. Vorrichtung (1) nach einem der vorhergehenden Ansprüche,
**dadurch gekennzeichnet, dass**
die elektrische Regeleinrichtung (42) mittels eines Verstellers (44) auf das Bremsventil (7) einwirkt.

12. Vorrichtung (1) nach einem der vorhergehenden Ansprüche,
**dadurch gekennzeichnet, dass** das Kopplungselement (13) über eine Hebelmechanik mit dem Bremsbelag (14) verbunden ist.

13. Vorrichtung (1) nach einem der vorhergehenden Ansprüche,
**dadurch gekennzeichnet, dass** der Bremszylinder (9) durch den Bremskolben (10) in eine Bremskammer und eine Bremsrückholkammer unterteilt ist.

14. Vorrichtung (1) nach einem der vorhergehenden Ansprüche,
**gekennzeichnet durch**
eine Vorspannfeder (45) zum Andrücken des Bremsbelags (14) an die Bremsfläche (15).

15. Vorrichtung (1) nach einem der vorhergehenden Ansprüche,
**gekennzeichnet durch**
einen Hochdruckbehälter (4) und einen Niederdruckbehälter (5) zum Bereitstellen von Hydraulikflüssigkeit.

16. Vorrichtung (1) nach einem der vorhergehenden Ansprüche,
**dadurch gekennzeichnet, dass**
der Bremsbelag (14) über die Verbindungsmittel (16) mit dem Abstützzylinder (19) verbunden und der Abstützkolben (17) am Gestell befestigt ist.

17. Vorrichtung (1) nach einem der vorhergehenden Ansprüche,
**dadurch gekennzeichnet, dass**
der Bremsbelag (14) über die Verbindungsmittel (16) mit dem Abstützkolben (17) verbunden und der Abstützzylinder (19) am Gestell befestigt ist.

## Claims

1. Device (1) for decelerating a moving mass, comprising
- a movably guided coupling element (13) for pressing a brake lining (14) against a braking surface (15),
- a brake cylinder (9) which is filled with hydraulic fluid,
- a brake piston (10) which can move in the brake cylinder (9) and is connected to the coupling element (13),
- at least one hydraulic line (2, 3) which can be connected to the brake cylinder (9), and
- an electric regulating device (42) for regulating deceleration of the mass in the normal operating mode,
**characterized by**
- fluid-mechanical safety braking means (43) which are configured to initiate regulated braking of the mass in the event of failure of the electronic components of the electric regulating device (42),
- wherein the safety braking means (43) serve to connect the brake cylinder (9) to the hydraulic line or lines (2, 3), and comprise a mechanical brake valve (7) in the hydraulic lines (2, 3) for adjusting the hydraulic pressure in the brake cylinder (9), a mechanical set point value transmitter (46, 47) and a hydraulic actual value transmitter,
- wherein the mechanical set point value transmitter (46, 47) is configured to apply a set point force, dependent on a set point value, to the brake valve (7),
- wherein the hydraulic actual value transmitter communicates via a hydraulic regulating line (50) with the hydraulic line or lines (2, 3) or the brake cylinder (9),
and is configured to apply an actual force to the brake valve (7), which actual force is dependent on the pressure in the hydraulic regulating line (50), and
- wherein the set point force counteracts the actual force.

2. Device (1) according to Claim 1,
**characterized by**
two hydraulic lines (2, 3) with different hydraulic pressures.

3. Device (1) according to Claim 1 or 2,
**characterized in that**
the brake lining (14) is supported via connecting means with a pressure transducer (18) which is attached to a frame of the mass to be decelerated and has a supporting cylinder (19) which is filled with hydraulic fluid and a supporting piston (17) which projects into the supporting cylinder (19), wherein the supporting cylinder (19) communicates with the brake cylinder (9) via the hydraulic lines (2, 3, 23, 24).

4. Device (1) according to Claim 3,
**characterized in that**
the hydraulic regulating line (50) communicates with the supporting cylinder (19).

5. Device (1) according to Claim 3 or 4,
**characterized in that**
the supporting cylinder (19) is divided into a supporting chamber (20) and a supporting return chamber (21) by the supporting piston (17), wherein the supporting chamber and the supporting return chamber communicate with a high pressure line or low pressure line via nonreturn valves.

6. Device (1) according to Claim 5,
**characterized in that**
compression springs (22) are provided in the supporting chamber (20) and in the supporting return chamber (21), wherein a pressure transducer return valve (29) is provided for equalizing the pressure between the supporting chamber (20) and the supporting return chamber (21), and wherein a control unit (33) initiates the pressure equalization by means of the pressure transducer return valve (29) and the compression springs (22).

7. Device (1) according to Claim 5 or 6,
**characterized in that**
the hydraulic regulating line (50) is connected to the outlet of a valve (49) which communicates on the inlet side with the supporting chamber (20) or with the supporting return chamber (21) as a function of the relatively high pressure.

8. Device (1) according to one of Claims 1 to 7,
**characterized in that**
the set point value transmitter has an adjusting screw (46) which interacts with an adjusting spring (47).

9. Device (1) according to one of Claims 1 to 8,
**characterized in that**
the set point value transmitter (46, 47) has a fluidic or mechanical converter which generates a set point force which is dependent on the mass to be decelerated.

10. Device (1) according to one of Claims 1 to 9,
**characterized in that**
the actual value transmitter has a pressure cylinder with a sliding element.

11. Device (1) according to one of the preceding claims,
**characterized in that**
the electric regulating device (42) acts on the brake valve (7) by means of an actuating element (44).

12. Device (1) according to one of the preceding claims,
**characterized in that**
the coupling element (13) is connected to the brake lining (14) via a lever mechanism.

13. Device (1) according to one of the preceding claims,
**characterized in that**
the brake cylinder (9) is divided into a braking chamber and a braking return chamber by means of the brake piston (10).

14. Device (1) according to one of the preceding claims,
**characterized by**
a pre-stressing spring (45) for pressing the brake lining (14) against the braking surface (15).

15. Device (1) according to one of the preceding claims,
**characterized by**
a high pressure vessel (4) and a low pressure vessel (5) for making available hydraulic fluid.

16. Device (1) according to one of the preceding claims,
**characterized in that**
the brake lining (14) is connected to the supporting cylinder (19) via the connecting means (16), and the supporting piston (17) is attached to the frame.

17. Device (1) according to one of the preceding claims,
**characterized in that**
the brake lining (14) is connected to the supporting piston (17) via the connecting means (16), and the supporting cylinder (19) is attached to the frame.

## Revendications

1. Système (1) de freinage d'une masse en déplacement, comprenant
- un élément (13) de couplage guidé de manière mobile pour pousser une garniture (14) de frein sur une surface (15) de frein,
- un cylindre (9) de frein empli de liquide hydraulique,
- un piston (10) de frein mobile dans le cylindre (9) de frein et relié à l'élément (13) de couplage,
- au moins un conduit (2, 3) hydraulique, qui peut communiquer avec le cylindre (9) de frein et
- un dispositif (42) électrique de régulation pour réguler un freinage de la masse en fonctionnement normal,
**caractérisé par**
- des moyens (43) de frein de sécurité fluidiques-mécaniques, qui, en cas de défaillance de composants électroniques du dispositif (42) électrique de régulation, sont conçus pour faire débuter un freinage régulé de la masse,
- dans lequel les moyens (43) de frein de sécurité servent à faire communiquer le cylindre (9) de frein avec le ou les conduits (2, 3) hydrauliques et comprennent une soupape (7) de frein, réagissant mécaniquement dans les conduits (2, 3) hydrauliques, pour régler la pression hydraulique dans le cylindre (9) de frein, un transmetteur (46, 47) mécanique de valeur de consigne et un transmetteur hydraulique de valeur réelle,
- dans lequel le transmetteur (46, 47) mécanique de valeur de consigne est conçu pour appliquer à la soupape (7) de frein une force de consigne qui dépend d'une valeur de consigne,
- dans lequel le transmetteur hydraulique de valeur réelle communique, par un conduit (50) hydraulique de régulation, avec le ou les conduits (2, 3) hydrauliques ou avec le cylindre (9) de frein, et est conçu pour appliquer à la soupape (7) de frein une force réelle, qui dépend de la pression dans le conduit (50) hydraulique de régulation et
- dans lequel la force de consigne s'oppose à la force réelle.

2. Système (1) suivant la revendication 1,
**caractérisé par**
deux conduits (2, 3) hydrauliques ayant des pressions hydrauliques différentes.

3. Système (1) suivant la revendication 1 ou 2,
**caractérisé en ce que**
la garniture (14) de frein est, par des moyens de liaison, appuyée par un transmetteur (18) de pression fixé à un bâti de la masse à freiner, transmetteur qui a un cylindre (19) d'appui empli de liquide hydraulique et un piston (17) d'appui pénétrant dans le cylindre (19) d'appui, le cylindre (19) d'appui communiquant avec le cylindre (9) de frein par les conduits (2, 3, 23, 24) hydrauliques.

4. Système (1) suivant la revendication 3,
**caractérisé en ce que**
le conduit (50) hydraulique de régulation communique avec le cylindre (19) d'appui.

5. Système (1) suivant la revendication 3 ou 4,
**caractérisé en ce que**
le cylindre (19) d'appui est subdivisé, par le piston (17) d'appui, en une chambre (20) d'appui et en une chambre (21) de rappel d'appui, la chambre d'appui et la chambre de rappel d'appui communiquant, par des clapets anti-retour, avec un conduit sous haute pression ou un conduit sous basse pression.

6. Système (1) suivant la revendication 5,
**caractérisé en ce qu'**
il est prévu, dans la chambre (20) d'appui et dans la chambre (21) de rappel d'appui, des ressorts (22) de compression, une soupape (29) de rappel de transmetteur de pression étant prévue pour la compensation de la pression entre la chambre (20) d'appui et la chambre (21) de rappel d'appui, et dans lequel une unité (33) de commande fait débuter la compensation de la pression par la soupape (29) de rappel de transmetteur de pression et les ressorts (22) de compression.

7. Système (1) suivant la revendication 5 ou 6,
**caractérisé en ce que**
le conduit (50) hydraulique de régulation communique avec la sortie d'une soupape (49), qui communique, en fonction de la pression plus élevée, du côté de l'entrée, avec la chambre (20) d'appui ou avec la chambre (21) de rappel d'appui.

8. Système (1) suivant l'une des revendications 1 à 7,
**caractérisé en ce que**
le transmetteur de valeur de consigne a une vis (46) de réglage coopérant avec un ressort (47) de réglage.

9. Système (1) suivant l'une des revendications 1 à 8,
**caractérisé en ce que**
le transmetteur (46, 47) de consigne a un convertisseur fluidique ou mécanique, qui produit une force de consigne dépendant de la masse à freiner.

10. Système (1) suivant l'une des revendications 1 à 9,
**caractérisé en ce que**
le transmetteur de valeur réelle dispose d'un cylindre de pression ayant un élément de déplacement.

11. Système (1) suivant l'une des revendications précédentes,
**caractérisé en ce que**
le dispositif (42) électrique de régulation agit au moyen d'un régleur (44) sur la soupape (7) de frein.

12. Système (1) suivant l'une des revendications précédentes,
**caractérisé en ce que**
l'élément (13) de couplage est relié à la garniture (14) de frein par un mécanisme à levier.

13. Système (1) suivant l'une des revendications précédentes,
**caractérisé en ce que**
le cylindre (9) de frein est subdivisé par le piston (10) de frein en une chambre de frein et en une chambre de rappel de frein.

14. Système (1) suivant l'une des revendications précédentes,
**caractérisé par**
un ressort (45) de précontrainte pour appuyer la garniture (14) de frein sur la surface (15) de frein.

15. Système (1) suivant l'une des revendications précédentes,
**caractérisé par**
un réservoir (4) sous haute pression et un réservoir (5) sous basse pression de mise à disposition de liquide hydraulique.

16. Système (1) suivant l'une des revendications précédentes,
**caractérisé en ce que**
la garniture (14) de frein est reliée par les moyens (16) de liaison au cylindre (19) d'appui et le piston (17) d'appui est fixé au bâti.

17. Système (1) suivant l'une des revendications précédentes,
**caractérisé en ce que**
la garniture (14) de frein est reliée par les moyens (16) de liaison au piston (17) d'appui et le cylindre (19) d'appui est fixé au bâti.
